# EUROPEAN PATENT SPECIFICATION

(11) **EP 2 455 930 B1**
(45) Date of publication and mention of the grant of the patent: **25.09.2013**
(21) Application number: 10014782.6
(22) Date of filing: 19.11.2010
(51) Int. Cl.: G09F 9/305, G09F 23/00, D06F 39/00, G02B 6/00, A47L 15/42

(54) **A display for indicating an operational progress of an apparatus, in particular a household appliance**
Display zur Anzeige eines Betriebsvorgangs eines Geräts, im Besonderen eines Haushaltsgeräts
Écran indiquant la progression opérationnelle d'un appareil, en particulier un appareil domestique

(43) Date of publication of application: 23.05.2012
(73) Proprietor: Electrolux Home Products Corporation N.V., 1130 Brussel (BE)
(72) Inventor: Allsebrook, Arran, 33170 Pordenone (IT); Ingre, Torkel, 11632 Stockholm (SE)
(74) Representative: Baumgartl, Gerhard Willi

(56) References cited:
- US-A- 5 349 504
- US-A- 5 915 060
- US-A- 5 938 324
- US-A- 5 988 842
- US-B1- 6 463 204

## Description

The present invention relates to a display for indicating an operational progress of an apparatus, in particular of a household appliance, as well as to an apparatus.

The operations of many apparatus are performed according to a predetermined and/or adjustable program. The operations of household appliances, like washing machines, laundry driers or dishwashers, are performed automatically, after the user has started the procedure. It would be advantageous to inform the user about the progress of the operation by simply means.

DE 103 37 043 A1 discloses an analogous display for indicating the operational progress of a household appliance. The display includes a plurality of light emitting diodes arranged in series. At the start of the operation the first light emitting diode is activated. Then the neighbouring light emitting diodes are consecutively activated. The number of activated light emitting diodes represents the elapsed time of the operation.

DE 101 44 668 A1 discloses a display for indicating the speed of a rotating component of a household appliance. The display includes a closed light-band with a plurality of light emitting diodes. The light emitting diodes flash, so that a rotating light signal is generated. The rotating speed of the light signal is proportional to the actual speed of the rotating component. The light signal is further used for indicating the operational progress of the household appliance.

In US 5 988 842 A1 discloses the preamble of claim 1. US 5 988 842 A1 intermediate walls are disclosed but there is no reference to connection elements between sections of the light guide (Fig.6). The sections of the light guide are separated from each other. This document can give those skilled in the art no hints for the solution of the objective problem.

In US 6 463 204 B1 coupling elements between the light guides are disclosed, but there are no means to hinder the scattering of light from one light guide to the neighbouring one. There is no reference to intermediate walls (Fig. 1 and Fig. 2). So also this document can give those skilled in the art no hints for the solution according to claim 1.

EP 1 417 440 A1 discloses a cooking appliance with an optical indicator light. The colour and/or the colour intensity of the indicator light are in ratio to the temperature in the oven cavity.

It is an object of the present invention to provide a display for indicating an operational progress of an apparatus, wherein the display is visible from a distance and has an aesthetic decoration and low complexity.

The object of the present invention is achieved by the display according to claim 1.

The present invention relates a display for indicating an operational progress of an apparatus, in particular of a household appliance, wherein:
- the display includes at least one light guide subdivided into a plurality of sections,
- the display includes a plurality of light sources, preferably a plurality of light emitting diodes, arranged according to a predetermined scheme,
- the light sources are separately controlled or controllable,
- each section of the plurality of sections corresponds with at least one light source,
- the display includes at least one front casing, for receiving the light guide, and
- the casing is at least partially complementary to the light guide, preferably in order to prevent a light propagation between the sections of the light guide.

The core of the present invention is the structure of the light guide and the compatible front casing. The single sections of said light guide are separated from each other, so that the light from one light emitting diode is only spreading in the corresponding section within the light guide. This contributes to the visibility of the display from a distance.

In particular, the light guide can be a light guiding device, which can preferably consist of a single piece or comprise a plurality of single light guides.

In particular, the light guide is made of transparent plastics. Transparent plastic is a cheap material.

Further, the light guide may be formed as a single-piece part. The light guide as the single-piece part simplifies the production of the display.

For example, the sections of the light guide are arranged in series. This allows a clear animation indicating the progress of the operation. According to a further example, the sections of the light guide may be arranged circularly.

Preferably, at least one section of the light guide has a changing depth, wherein said depth extends parallel to a main axis of the light cone from the corresponding light emitting diode. This structure allows a light fading effect with an advantageous aesthetic.

In particular, the depth of the at least one section decreases with the distance from the corresponding light emitting diode. This contributes to the light fading effect. For example, at least one of the sections at the ends of the light guide has a changing depth.

Preferably, the intensities of the light emitting diodes are separately controlled or controllable. This allows various animations for indicating the progress of the operation and/or the status of the apparatus. The light emitting diodes may be activated by a steady burning light or by a flashing light.

In a similar way, the colours of the light emitting diodes are separately controlled or controllable. This allows additional animations for indicating the status of the apparatus and/or the progress of the operation.

Further, the front casing may comprise walls enclosing at least partially the light guide perpendicular to the main axis of the light cone from the light emitting diodes.

The front casing comprises a plurality of intermediate walls arranged or arrangable between neighbouring sections of the light guide. This prevents a light distribution to the neighbouring sections of the light guide.

Neighbouring sections of the light guide are connected by connecting elements arranged beyond the light cone of the corresponding light emitting diodes.

Preferably, the apparatus is a dishwasher or an oven.

Furthermore, the invention relates to an apparatus, in particular a household appliance, wherein the apparatus and/or the household appliance is preferably an oven or dishwasher, with a display according to the invention.

Novel and inventive features of the present invention are set forth in the appended claims.

The present invention will be described in further detail with reference to the accompanied drawings, in which
- FIG 1: illustrates a perspective sectional view of a display according to a preferred embodiment of the present invention,
- FIG 2: illustrates a sectional side view of the display according to the preferred embodiment of the present invention,
- FIG 3: illustrates a perspective view of a light guide for the display according to the preferred embodiment of the present invention,
- FIG 4: illustrates a perspective view of the light guide and a circuit board for the display according to the preferred embodiment of the present invention,
- FIG 5: illustrates a perspective view of a part of the light guide for the display according to the preferred embodiment of the present invention,
- FIG 6: illustrates a sectional side view of the light guide for the display according to the preferred embodiment of the present invention, and
- FIG 7: illustrates a top view of the light guide for the display according to the preferred embodiment of the present invention.

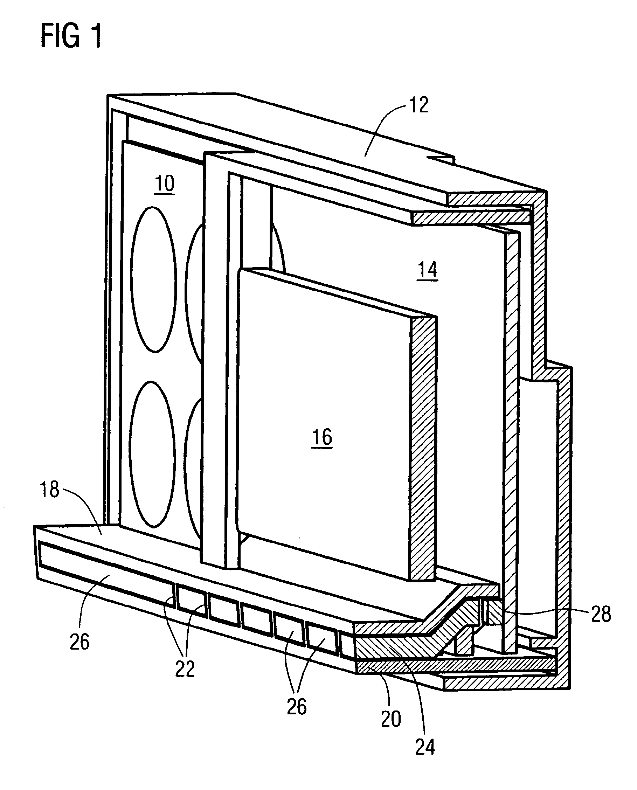

FIG 1 illustrates a perspective sectional view of a display according to a preferred embodiment of the present invention. The display is provided for indicating the progress and/or the status of the operation of an apparatus, in particular a household appliance.

The display includes a front casing 10 and a rear casing 12. An open front side of the rear casing 12 is covered by the front casing 10. A circuit board 14 is arranged between the front casing 10 and the rear casing 12. A screen 16 is arranged within a rectangular opening in the front casing 10. In this example, the screen 16 is a liquid crystal display (LCD) screen.

The front casing 10 comprises a horizontal slot stretching across the substantially whole broadness of said front casing 10. The slot includes a top wall 18 and a bottom wall 20, wherein said slot projects forwardly. The slot comprises a plurality of intermediate walls 22, so that the slot is subdivided into a plurality of cells arranged side by side. In this example, the slot is arranged in the lower portion of the front casing 10.

A light guide 24 is arranged within the slot. The light guide 24 is formed complementary to the inner space of the slot. Thus, the light guide 24 fills the slot and the cells. The light guide 24 is subdivided into a plurality of sections 26 corresponding with the cells of the slots. The both sections 26 at the ends of the light guide 24 are broader than the other sections 26. In this example, the sections 26 at the ends are about four or five times broader than the other sections 26.

A plurality of light emitting diodes 28 is arranged on the circuit board 14 along a horizontal line. Each light emitting diode (LED) 28 corresponds with one of the sections 26 of the light guide 24. The light emitting diode 28 is arranged behind the corresponding section 26 of the light guide 24. Alternatively, one section 26 of the light guide 24 may correspond with several light emitting diodes 28.

Each light emitting diode (LED) 28 is separately controlled. In particular, the intensity of the emitted light from the light emitting diode 28 is controllable. Further, the colour of the emitted light from the light emitting diode 28 may be controllable.

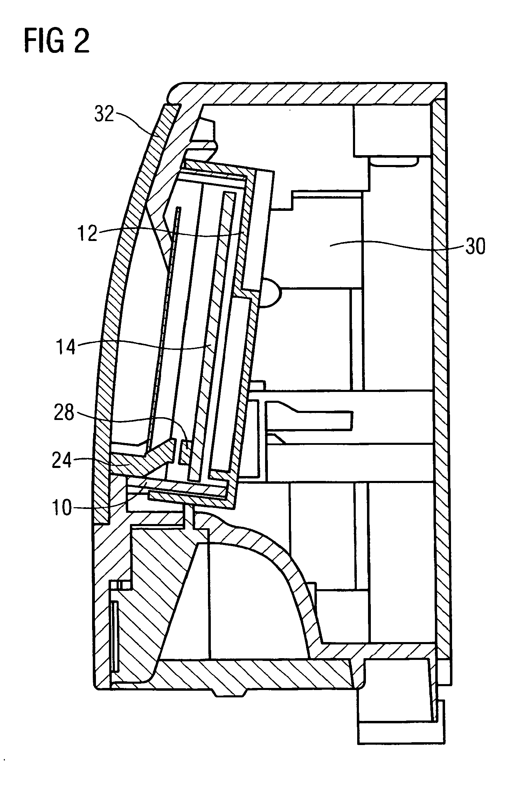

FIG 2 illustrates a sectional side view of the display according to the preferred embodiment of the present invention. The display is integrated within a housing 30 of a household appliance. A front panel 32 is arranged at the front side of said housing 30 and covers the display. The front panel 32 is at least partially transparent.

The circuit board 14 is arranged between the front casing 10 and the rear casing 12. The light emitting diodes 28 are attached at the circuit board 14 and arranged behind the light guide 24. The light guide 24 is made of transparent plastics. Further, the light guide 24 is made in one mould. A rear surface of the light guide 24 is in front of the light emitting diodes 28. A front surface of the light guide 24 is behind the front panel 32.

The light emitted from the light emitting diodes 28 is spread through the light guide 24. The light guide 24 reflects and distributes the light received at the rear surface to the front surface of the light guide 24. The geometric arrangement of the housing 30, the front casing 10, the rear casing 12, the intermediate walls 22 and the sections 26 prevent that light from one cell is reflected into one of the neighbouring cells.

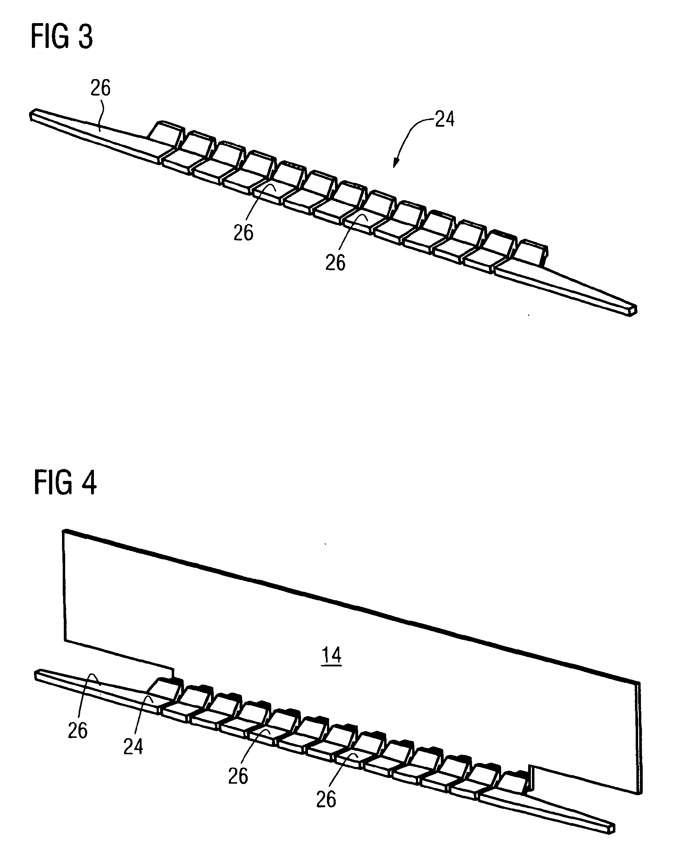

FIG 3 illustrates a perspective view of the light guide 24 for the display according to the preferred embodiment of the present invention. FIG 3 clarifies the geometric structure of the light guide 24.

The light guide 24 is subdivided into the plurality of sections 26. The both sections 26 at the ends of the light guide 24 are considerably broader than the other sections 26. Said sections 26 at the ends of the light guide 24 provide an aesthetic light fade effect. The depth of the sections 26 at the ends of the light guide 24 decreases outwardly. Said decreasing depth allows the light fade effect.

FIG 4 illustrates a perspective view of the light guide 24 and the circuit board 14 for the display according to the preferred embodiment of the present invention. FIG 4 clarifies the arrangement of the light guide 24 in view of the circuit board 14.

The light emitting diodes 28 are attached near a lower border of the circuit board 14. The light emitting diodes 28 are arranged between the light guide 24 and the circuit board 14. The arrangement of the light emitting diodes 28 and the geometric structure of the light guide 24 allow the optical separation between the cells.

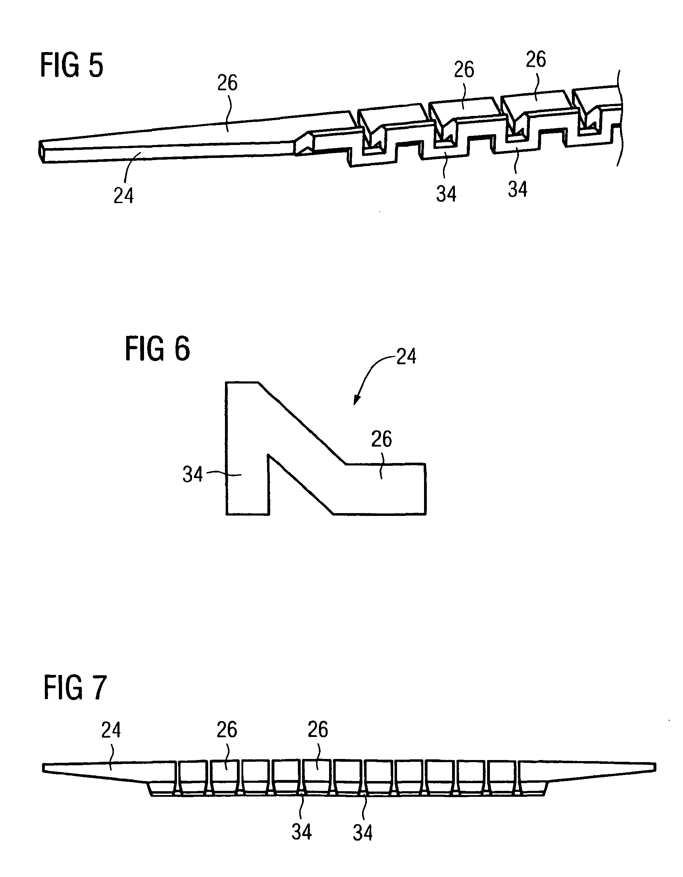

FIG 5 illustrates a perspective view of a part of the light guide 24 for the display according to the preferred embodiment of the present invention. FIG 5 clarifies that the rear side of the light guide 24 has the form of a meander. The higher portions of said meander are the rear surfaces of the sections 26. The lower portions of the meander are connecting elements 34 between said sections 26. This structure prevents that light from one section 26 is reflected or distributed into a neighbouring section 26.

FIG 6 illustrates a sectional side view of the light guide 24 for the display according to the preferred embodiment of the present invention. The sectional side view of the light guide 24 shows that effectively no light may be radiated between the neighbouring sections 26.

FIG 7 illustrates a top view of the light guide 24 for the display according to the preferred embodiment of the present invention. FIG 7 clarifies the big depth of the sections 26 and the relative small depth of the connecting elements 34.

For example, at the start of the operation a first light emitting diode 28 in the series is activated. Then the neighbouring light emitting diodes 28 are consecutively activated. The number of activated light emitting diodes 28 represents the elapsed time of the operation.

Further, at the start of the operation a light emitting diode 28 in the centre of the series is activated. Then the outwardly neighbouring light emitting diodes 28 are consecutively activated, so that the light signal becomes broader by the progress of the operation.

Alternatively, the light signals of the above examples may be programmed as a so-called running light.

At last, the light from the light emitting diodes 28 can also be used to highlight a symbol, a number and/or a text printed at the front panel 32. Said symbol, number or text may give certain information to the user.

Although illustrative embodiments of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### List of reference numerals

- 10: front casing
- 12: rear casing
- 14: circuit board
- 16: screen
- 18: top wall
- 20: bottom wall
- 22: intermediate wall
- 24: light guide
- 26: section
- 28: light emitting diode
- 30: housing
- 32: front panel
- 34: connecting element

## Claims

1. A display for indicating an operational progress of an apparatus, in particular of a household appliance, wherein:
- the display includes at least one light guide (24) subdivided into a plurality of sections (26),
- the display includes a plurality of light sources, preferably a plurality of light emitting diodes (28), arranged according to a predetermined scheme,
- the light sources (28) are separately controlled or controllable,
- each section (26) of the plurality of sections corresponds with at least one light source (28),
- neighbouring sections (26) of the light guide (24) are connected by connecting elements (34) arranged beyond the light cone of the corresponding light emitting diodes (28)
- the display includes at least one front casing (10), for receiving the light guide (24), and
- the casing (10) is at least partially complementary to the light guide (24), in order to prevent a light propagation between the sections (26) of the light guide (24), **characterized in that** :
- the front casing (10) comprises a plurality of intermediate walls (22) arranged or arrangable between neighbouring sections (26) of the light guide (24).

2. The display according to claim 1,
**characterized in, that**
the light guide (24) is made of transparent plastics.

3. The display according to claim 1 or 2,
**characterized in, that**
the light guide (24) is formed as a single-piece part.

4. The display according to any one of the preceding claims,
**characterized in, that**
the sections (26) of the light guide (24) are arranged in series.

5. The display according to any one of the preceding claims,
**characterized in, that**
at least one section (26) of the light guide (24) has a changing depth, wherein said depth extends parallel to a main axis of the light cone from the corresponding light emitting diode (28).

6. The display according to claim 5,
**characterized in, that**
the depth of the at least one section (26) decreases with the distance from the corresponding light emitting diode (28).

7. The display according to claim 5 or 6,
**characterized in, that**
at least one of the sections (26) at the ends of the light guide (24) have a changing depth.

8. The display according to any ane of the preceding claims,
**characterized in, that**
the intensities of the light emitting diodes (28) are separately controlled or controllable.

9. The display according to any one of the preceding claims,
**characterized in, that**
the colours of the light emitting diodes (28) are separately controlled or controllable.

10. The display according to any one of the preceding claims,
**characterized in, that**
the front casing (10) comprises walls (18, 20) enclosing at least partially the light guide (24) perpendicular to the main axis of the light cone from the light emitting diodes (28).

11. The display according to any one of the preceding claims,
**characterized in, that**
the apparatus is a dishwasher or an oven.

12. Apparatus, in particular a household appliance,
wherein the apparatus and/or the household appliance is preferably an oven or dishwasher,
with a display according to any one of the preceding claims.

## Patentansprüche

1. Display zur Anzeige eines Betriebsfortschritts eines Geräts, insbesondere eines Haushaltgeräts, wobei:
- das Display wenigstens eine Lichtführung (24) umfasst, die in eine Mehrzahl von Abschnitten (26) unterteilt ist,
- das Display eine Mehrzahl von Lichtquellen umfasst, vorzugsweise eine Mehrzahl von Leuchtdioden (28), die nach einem vorbestimmten Schema angeordnet sind,
- die Lichtquellen (28) getrennt gesteuert werden oder steuerbar sind,
- jeder Abschnitt (26) der Mehrzahl von Abschnitten wenigstens einer Lichtquelle (28) entspricht,
- benachbarte Abschnitte (26) der Lichtführung (24) mit Verbindungselementen (34) verbunden sind, die außerhalb des Lichtkegels der entsprechenden Leuchtdioden (28) angeordnet sind,
- das Display wenigstens ein vorderes Gehäuse (10) zum Aufnehmen der Lichtführung (24) umfasst, und
- das Gehäuse (10) wenigstens teilweise komplementär zur Lichtführung (24) ist, um eine Lichtausbreitung zwischen den Abschnitten (26) der Lichtführung (24) zu verhindern, **dadurch gekennzeichnet, dass**:
- das vordere Gehäuse (10) eine Mehrzahl von Zwischenwänden (22) umfasst, die zwischen benachbarten Abschnitten (26) der Lichtführung (24) angeordnet sind oder anordenbar sind.

2. Display gemäß Anspruch 1,
**dadurch gekennzeichnet, dass**
die Lichtführung (24) aus transparenten Kunststoffen hergestellt ist.

3. Display gemäß Anspruch 1 oder 2,
**dadurch gekennzeichnet, dass**
die Lichtführung (24) als einstückiges Teil gebildet ist.

4. Display gemäß einem der vorangehenden Ansprüche,
**dadurch gekennzeichnet, dass**
die Abschnitte (26) der Lichtführung (24) in Reihe angeordnet sind.

5. Display gemäß einem der vorangehenden Ansprüche,
**dadurch gekennzeichnet, dass**
wenigstens ein Abschnitt (26) der Lichtführung (24) eine veränderliche Tiefe aufweist, wobei sich die Tiefe parallel zu einer Hauptachse des Lichtkegels von der entsprechenden Leuchtdiode (28) erstreckt.

6. Display gemäß Anspruch 5,
**dadurch gekennzeichnet, dass**
die Tiefe des wenigstens einen Abschnitts (26) mit dem Abstand von der entsprechenden Leuchtdiode (28) abnimmt.

7. Display gemäß Anspruch 5 oder 6,
**dadurch gekennzeichnet, dass**
wenigstens einer der Abschnitte (26) an den Enden der Lichtführung (24) eine veränderliche Tiefe aufweist.

8. Display gemäß einem der vorangehenden Ansprüche,
**dadurch gekennzeichnet, dass**
die Intensitäten der Leuchtdioden (28) getrennt gesteuert werden oder steuerbar sind.

9. Display gemäß einem der vorangehenden Ansprüche,
**dadurch gekennzeichnet, dass**
die Farben der Leuchtdioden (28) getrennt gesteuert werden oder steuerbar sind.

10. Display gemäß einem der vorangehenden Ansprüche,
**dadurch gekennzeichnet, dass**
das vordere Gehäuse (10) Wände (18, 20) umfasst, die wesentlich teilweise die Lichtführung (24) senkrecht zur Hauptachse des Lichtkegels von der Leuchtdiode (28) einschließen.

11. Display gemäß einem der vorangehenden Ansprüche,
**dadurch gekennzeichnet, dass**
das Gerät ein Geschirrspüler oder ein Backofen ist.

12. Gerät, insbesondere ein Haushaltsgerät, wobei das Gerät und/oder das Haushaltsgerät vorzugsweise ein Backofen oder ein Geschirrspüler ist, mit einem Display gemäß einem der vorangehenden Ansprüche umfasst.

## Revendications

1. Dispositif d'affichage pour indiquer une progression du fonctionnement d'un appareil, en particulier un appareil électroménager, dans lequel :
le dispositif d'affichage comprend au moins un guide de lumière (24) subdivisé en une pluralité de sections (26),
le dispositif d'affichage comprend une pluralité de sources de lumière, de préférence une pluralité de diodes électroluminescentes (28), disposées selon un schéma prédéterminé,
les sources de lumière (28) sont contrôlées ou contrôlables séparément,
chaque section (26) parmi la pluralité de sections correspond à au moins une source de lumière (28),
des sections avoisinantes (26) du guide de lumière (24) sont connectées en connectant des éléments (34) disposés au-delà du cône de lumière des diodes électroluminescentes correspondantes (28),
le dispositif d'affichage comprend au moins un boîtier avant (10), pour recevoir le guide de lumière (24), et
le boîtier (10) est au moins partiellement complémentaire du guide de lumière (24), de manière à empêcher une propagation de la lumière entre les sections (26) du guide de lumière (24), **caractérisé en ce que** :
le boîtier avant (10) comprend une pluralité de parois intermédiaires (22) disposées ou disposables entre des sections avoisinantes (26) du guide de lumière (24).

2. Dispositif d'affichage selon la revendication 1,
**caractérisé en ce que**
le guide de lumière (24) est fabriqué en plastique transparent.

3. Dispositif d'affichage selon la revendication 1 ou la revendication 2,
**caractérisé en ce que**
le guide de lumière (24) est constitué d'une seule pièce.

4. Dispositif d'affichage selon l'une quelconque des revendications précédentes,
**caractérisé en ce que**
les sections (26) du guide de lumière (24) sont disposées en série.

5. Dispositif d'affichage selon l'une quelconque des revendications précédentes,
**caractérisé en ce que**
au moins une section (26) du guide de lumière (24) a une profondeur changeante, où ladite profondeur s'étend parallèlement à un axe principal du cône de lumière depuis la diode électroluminescente correspondante (28).

6. Dispositif d'affichage selon la revendication 5,
**caractérisé en ce que**
la profondeur de l'au moins une section (26) diminue avec la distance à la diode électroluminescente correspondante (28).

7. Dispositif d'affichage selon la revendication 5 ou la revendication 6,
**caractérisé en ce que**
au moins une des sections (26) aux extrémités du guide de lumière (24) a une profondeur changeante.

8. Dispositif d'affichage selon l'une quelconque des revendications précédentes,
**caractérisé en ce que**
les intensités des diodes électroluminescentes (28) sont contrôlées ou contrôlables séparément.

9. Dispositif d'affichage selon l'une quelconque des revendications précédentes,
**caractérisé en ce que**
les couleurs des diodes électroluminescentes (28) sont contrôlées ou contrôlables séparément.

10. Dispositif d'affichage selon l'une quelconque des revendications précédentes,
**caractérisé en ce que**
le boîtier avant (10) comprend des parois (18, 20) enfermant au moins partiellement le guide de lumière (24) perpendiculairement à l'axe principal du cône de lumière depuis les diodes électroluminescentes (28).

11. Dispositif d'affichage selon l'une quelconque des revendications précédentes,
**caractérisé en ce que**
l'appareil est un lave-vaisselle ou un four.

12. Appareil, en particulier un appareil électroménager,
dans lequel l'appareil, et/ou l'appareil électroménager est de préférence un four ou un lave-vaisselle,
avec un dispositif d'affichage selon l'une quelconque des revendications précédentes.
